Europäisches Patentamt

European Patent Office

Office européen des brevets

(11) Veröffentlichungsnummer : **0 070 332**
B1

# (12) EUROPÄISCHE PATENTSCHRIFT

(45) Veröffentlichungstag der Patentschrift :
05.06.85

(21) Anmeldenummer : 81109199.0

(22) Anmeldetag : 29.10.81

(51) Int. Cl.⁴ : **B 60 P   3/32**

(54) **Regentraufe für Wohnanhänger.**

(30) Priorität : 17.07.81 DE 8120963 U

(43) Veröffentlichungstag der Anmeldung :
26.01.83 Patentblatt 83/04

(45) Bekanntmachung des Hinweises auf die Patenterteilung : 05.06.85 Patentblatt 85/23

(84) Benannte Vertragsstaaten :
AT CH DE FR GB IT LI NL

(56) Entgegenhaltungen :
DD-A-   146 922
DE-A- 1 530 913

(73) Patentinhaber : Ryssel, Siegfried
Augsburger Strasse 17
D-8901 Mühlhausen (DE)

(72) Erfinder : Ryssel, Siegfried
Augsburger Strasse 17
D-8901 Mühlhausen (DE)

(74) Vertreter : Charrier, Rolf, Dipl.-Ing.
Postfach 260 Rehlingenstrasse 8
D-8900 Augsburg 31 (DE)

**Beschreibung**

Die Neuerung betrifft eine Regentraufe für Wohnanhänger, Wohnmobile usw. mit einem an einer Außenwand angebrachten horizontal verlaufenden Profil mit mindestens einer innenseitigen Nut zum Einhängen eines Fensters und ggfs. einer außenseitigen Nut zum Einhängen einer Markise.

Bei Wohnanhängern, Wohnmobilen usw., bei denen es gebräuchlich ist, ein solches Profil vorzusehen, dient das Profil u. a. dazu, das vom Dach abfließende Regenwasser seitlich in Richtung der Profilenden abzuleiten. Von den Profilenden fließt dann das Regenwasser längs der Außenwand nach unten. Das nach unten fließende Wasser führt nicht nur zu unschönen Verschmutzungen der Außenwand sondern kann unten in die Wand eindringen, insbesondere im Bereich von Türen. Das eindringende Wasser führt zu Verrottungen. Da rückseitig die Wohnanhänger bzw. Wohnmobile Begrenzungsleuchten aufweisen müssen, welche unterhalb der Profilenden angeordnet sind, besteht auch die Gefahr, daß das von den Profilenden abfließende Regenwasser in diese Begrenzungsleuchten eindringt und dort zu Korrosionen führt.

Es besteht die Aufgabe, im Bereich der Profilenden das Regenwasser aufzufangen und von der Außenwand weg zu leiten.

Gelöst wird diese Aufgabe mit einer Regentraufe, wie sie in Anspruch 1 gekennzeichnet ist. Vorteilhafte Ausgestaltungen sind den Unteransprüchen entnehmbar.

Ausführungsbeispiele werden nachfolgend anhand der Zeichnungen erläutert. Es zeigen :

Figur 1   die Seitenansicht einer ersten Ausführungsform ;

Figur 2   eine Ansicht in Pfeilrichtung A in Fig. 1 dieser ersten Ausführungsform ;

Figur 3   die Seitenansicht einer zweiten Ausführungsform ;

Figur 4   die Seitenansicht einer dritten Ausführungsform ;

Figur 5   einen Längsschnitt durch eine vierte Ausführungsform ;

Figur 6   eine Seitenansicht einer fünften Ausführungsform und

Figur 7   eine Draufsicht auf diese fünfte Ausführungsform.

An der Außenwand 1 ist horizontal verlaufend ein Profil 2 angebracht, welches eine innenseitige Nut 3 aufweist, in welche ein Fenster eingehängt ist. Außerdem weist das Profil 2 eine außenseitige Nut 4 auf, in welche eine Markise einhängbar ist.

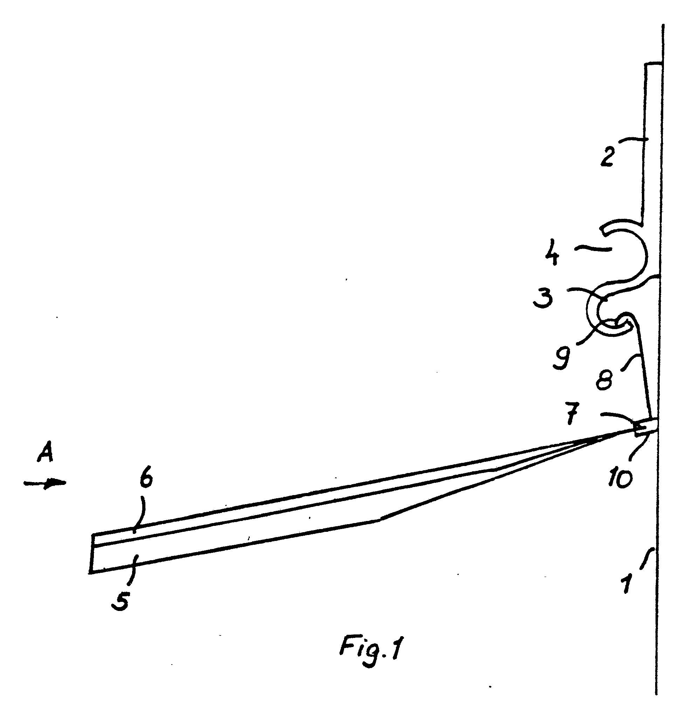

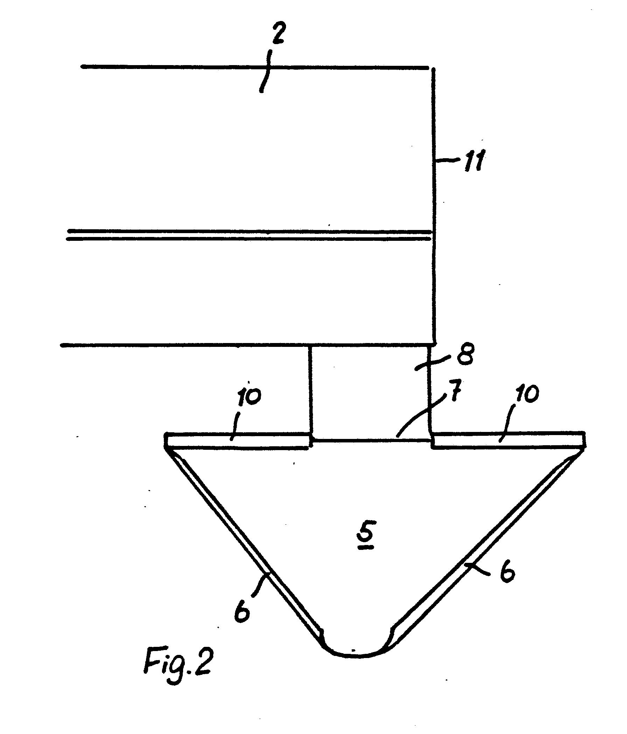

Die Regentraufe nach den Fig. 1 und 2 besteht aus einem Auffangblech 5, welches die Form einer nach außen zulaufenden Rinne aufweist, deren Seitenkanten 6 nach oben abgewinkelt sind. Vom wandseitigen Rand 7 des Auffangbleches 5 geht mittig, nach oben abgewinkelt, ein Einhängeteil 8 ab. Der obere Rand 9 des Einhängeteils 8 ist mit einer weiteren Abwinkelung versehen, welche etwa nach außen, unten verläuft und mit welcher die Regentraufe in die Nut einhängbar ist. Der wandseitige Rand 7 beidseits des Einhängeteils 8 ist mit einer elastischen Auflage 10 als Kantenschutz versehen, mit welcher die Regentraufe infolge ihres Eigengewichts gegen die Wand 1 anliegt.

Das vom Profilende 11 abfließende und neben dem Profilende 11 die Außenwand 1 herunterfließende Regenwasser kann infolge des Einhängeteils 8 und der dicht an der Wand 1 anliegenden Auflage 10 nicht längs der Wand 1 herunter fließen sondern wird vom Auffangblech 5 gesammelt und schräg nach außen von der Wand 1 weg abgeleitet.

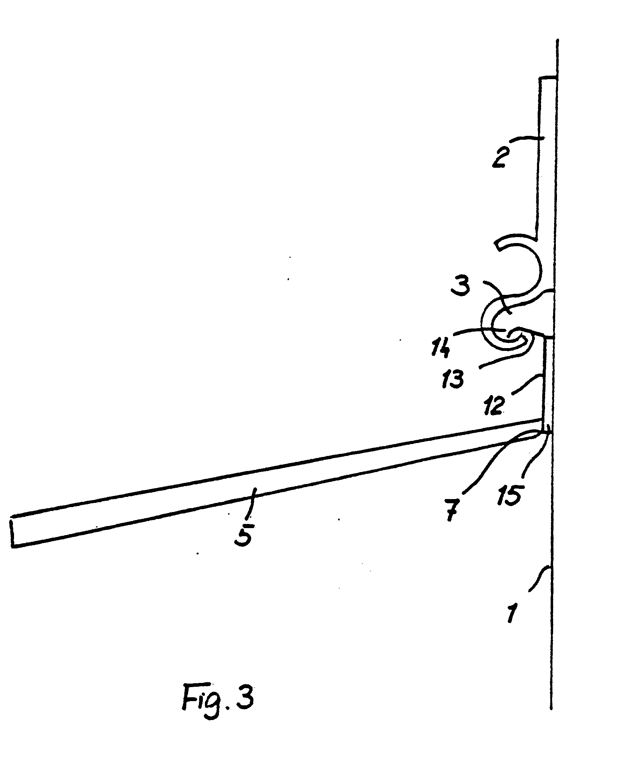

Bei dem Ausführungsbeispiel nach Fig. 3 weist das Auffangblech 5 wandseitig über seine gesamte Breite eine nach oben gerichtete Abbiegung 12 auf. Von dieser Abbiegung 12 geht dann mittig entsprechend Fig. 2 das Einhängeteil 13 ab, dessen oberer Einhängerand 14 abgewinkelt ist. Mit diesem Einhängerand 14 greift das Einhängeteil 13 in die Nut 3 ein.

Die Abbiegung 12 ist an ihrer Wandseite mit einer elastischen Auflage 15 versehen, mit welcher diese Abbiegung infolge des Eigengewichts der Regentraufe gegen die Wand 1 anliegt. Diese Regentraufe wird in Bezug auf das Profilende 11 wie in Fig. 2 gezeigt in die Nut 3 eingesetzt. Durch die elastische Auflage 15 und die Abbiegung 12 wird das vom Profilende 11 abfließende Regenwasser vom Auffangblech 5 aufgefangen und von der Wand 1 weggeleitet.

Bei den Ausführungsbeispielen nach den Fig. 1 bis 4 wird die Regentraufe durch Einschwenken des Einhängeteils in die Nut 3 eingesetzt.

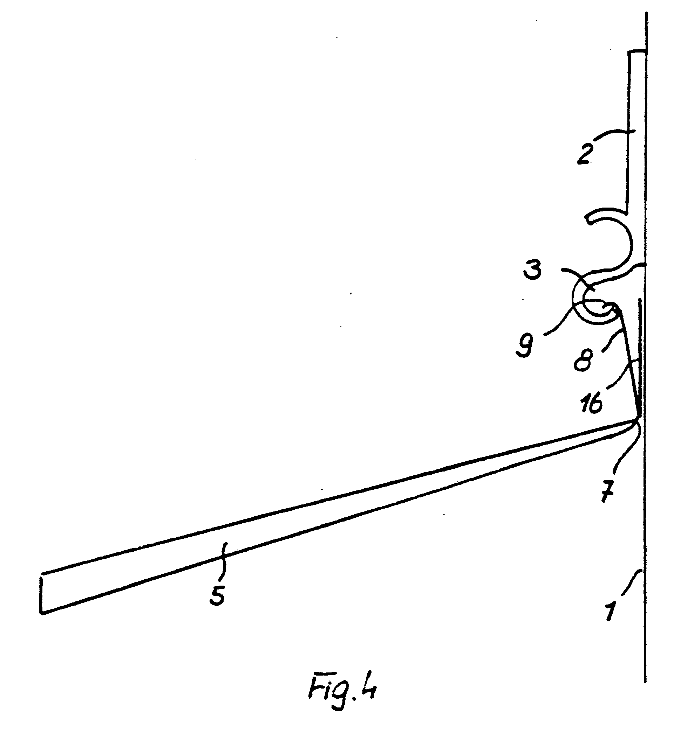

Bei der Ausführungsform nach Fig. 4 ist das Einhängeteil 8 mit seinem Einhängerand 9 etwa entsprechend den Fig. 1 und 2 ausgebildet und angeordnet. Beidseits der Einhängeteiles 8 ist jedoch das Auffangblech längs der wandseitigen Kante 7 nach oben abgewinkelt. Die Abbiegung ist mit 16 bezeichnet. Diese Abbiegung 16 ist vergleichbar mit der Abbiegung 12 nach Fig. 3, ist jedoch mittig unterbrochen durch das Einhängeteil 8, welches spitzwinkelig zur Abbiegung 16 verläuft. Die Abbiegung 16 kann wiederum rückseitig mit einer elastischen Auflage versehen sein, entsprechend der Auflage 15 nach Fig. 3.

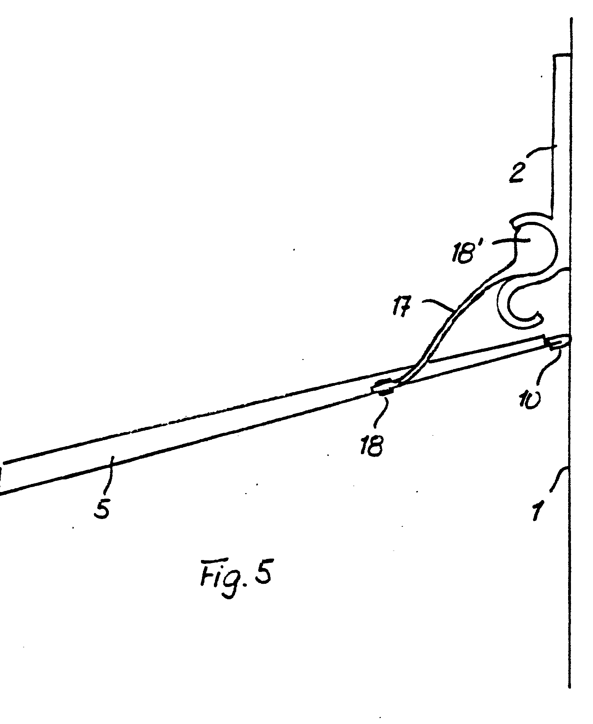

Bei dem Ausführungsbeispiel nach Fig. 5 ist mit dem Auffangblech 5 verbunden ein elastisches Einhängeteil 17, und zwar an der Oberseite des Auffangblechs 5. Es kann sich hier beispielsweise um eine Nietverbindung 18 handeln. Das hintere Ende des Einhängeteils 17 weist eine Verdickung 18' auf, welche in die Nut 4 einpasst. Diese Regentraufe wird seitlich vom Profilende 11 her in die Nut 4 eingeschoben.

Die wandseitige Kante 7 ist wiederum mit einer elastischen Auflage 10 versehen, mit welchem die Regentraufe gegen die Wand 1 anliegt.

Die Seitenkanten 6 können bei allen Ausführungsbeispielen mit einem Kantenschutz entsprechend der Auflage 10 versehen sein.

Die Einhängeteile 8, 13 können auch außermittig zum Auffangblech angeordnet sein. Sie brauchen nicht gerade sondern können auch bogenförmig verlaufen. Wesentlich ist, daß die Einhängeteile 8, 13 nur einen Teil der wandseitigen Breite des Auffangbleches 5 einnehmen und im übrigen das Auffangblech 5 wandseitig gegen die Wand 1 anliegt sei es mit seiner wandseitigen Kante 7 oder mit den Abbiegungen 12 bzw. 16.

Insbesondere bei den Ausführungsformen nach den Fig. 1 bis 4 ist von Vorteil, daß bei einer Berührung der in Kopfhöhe angeordneten Regentraufe diese sich aus ihrer Verankerung in der Nut 3 löst und somit von der Regentraufe keine Verletzungsgefahr ausgeht. Bei der Ausführungsform nach Fig. 5 besteht ebenfalls keine Verletzungsgefahr, da das Einhängeteil 17 elastisch ausgebildet ist.

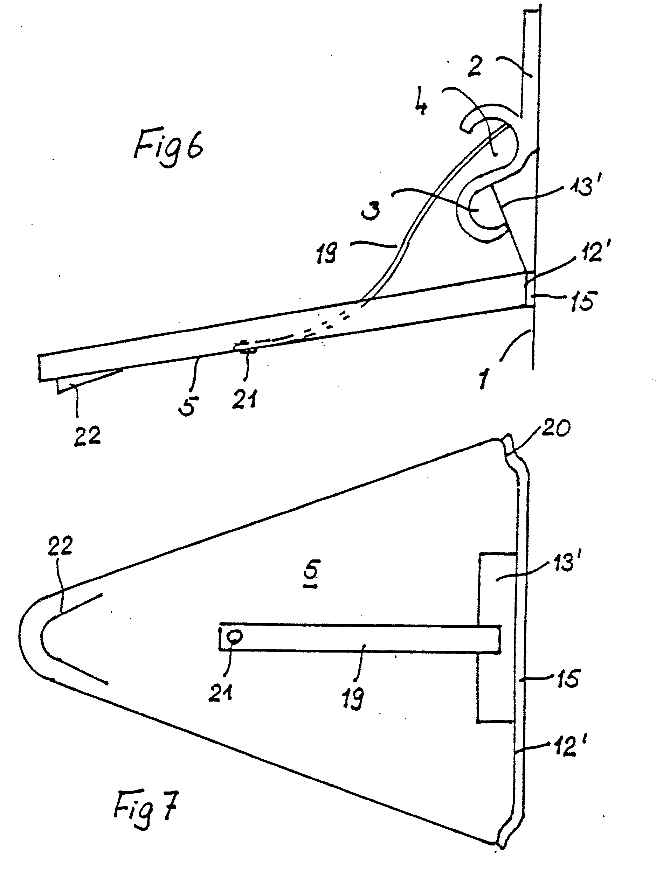

Bei dem bevorzugten Ausführungsbeispiel nach den Fig. 6 und 7 sind die Seitenkanten 6 nach oben abgewinkelt, wobei diese Abwinkelung hinten in die Abbiegung 12' übergeht. Von der Abbiegung 12' geht das Einhängeteil 13' schräg ab und greift in die Nut 3 ein. An der Abbiegung 12' ist eine elastische Auflage 15 angebracht.

An der Oberseite des Auffangbleches 5 ist über eine Niete 21 ein relativ starrer Bügel 19 befestigt, welcher mit seinem freien Ende in die andere Nut 4 eingreift. Durch diesen Bügel 19 wird die Abbiegung 12' und damit die Auflage 15 gegen die Außenwand 1 gepresst.

Vorne ist das Auffangblech 5 mit einer Austrittsnase 22 versehen.

Der Bügel 19 vermag sich um die Achse der Niete 21 zu drehen wodurch bei einer unbeabsichtigten Berührung sich das Auffangblech 5 aus seiner Halterung, d. h. dem Profil 2 zu lösen vermag.

Die seitlichen Enden 20 der Abbiegung 12' verlaufen etwa schräg zur Außenwand 1. Eine dieser Enden 20 kommt zur Anlage auf eine vertikal verlaufende Leiste längs der Außenwand 1, wenn diese rechtwinkelig mit einer weiteren Außenwand zusammenstößt. Auf diese Weise wird auch das längs der vertikalen Leiste herunter fließende Regenwasser aufgefangen.

**Patentansprüche**

1. Regentraufe für Wohnanhänger, Wohnmobile usw. mit einem an einer Außenwand angebrachten horizontal verlaufenden Profil mit mindestens einer innenseitigen Nut zum Einhängen eines Fensters und ggfs. einer außenseitigen Nut zum Einhängen einer Markise, dadurch gekennzeichnet, daß die Regentraufe aus einem von der Außenwand (1) abstehenden Auffangblech (5) in Form einer nach außen zulaufenden Rinne und mindestens einen vom Auffangblech (5) nach oben abgehenden Einhängeteil (8, 13, 17) besteht, das in eine der Nuten (3, 4) einsetzbar ist und nur einen Teil der wandseitigen Breite des Auffangblechs (5) einnimmt, wobei der wandseitige Rand (7, 12, 16) des Auffangblechs (5) zur Anlage an die Außenwand (1) kommt.

2. Regentraufe nach Anspruch 1, dadurch gekennzeichnet, daß das Einhängeteil (8, 13) einstückig zum Auffangblech (5) ist, vom wandseitigen Rand (7, 12) des Auffangblechs (5) etwa mittig nach oben abgeht und in die innenseitige Nut (3) eingreift.

3. Regentraufe nach Anspruch 2, dadurch gekennzeichnet, daß das Einhängeteil (8, 13) einen von der Außenwand wegweisenden abgewinkelten oberen Einhängerand (9, 13) zum Eingriff in die innenseitige Nut (3) aufweist.

4. Regentraufe nach einem der Ansprüche 1 bis 3, dadurch gekennzeichnet, daß das Auffangblech (5) wandseitig eine nach oben verlaufende Abbiegung (12, 16) als Anlage an die Außenwand (1) aufweist.

5. Regentraufe nach Anspruch 4, dadurch gekennzeichnet, daß der zur Anlage an die Außenwand (1) kommende Rand (7, 12, 16) des Auffangblechs (5) wandseitig mit einer elastischen Auflage (10, 15) versehen ist.

6. Regentraufe nach Anspruch 4, dadurch gekennzeichnet, daß das Einhängeteil (8) von der wandseitigen Kante (7) nach oben spitzwinklig zur Abbiegung (16) verläuft.

7. Regentraufe nach Anspruch 1 für ein Profil mit außenseitiger Nut, dadurch gekennzeichnet, daß das Einhängeteil (17) elastisch ausgebildet und oberseitig mit dem Auffangblech (5) verbunden ist und ein verdicktes quer zum Auffangblech (5) verlaufendes Einschiebeende (18') zum Einsatz in die äußere Nut (4) aufweist.

8. Regentraufe nach einem der Ansprüche 1 bis 7, dadurch gekennzeichnet, daß die Seitenkanten (6) des Auffangblechs (5) nach oben abgewinkelt sind.

9. Regentraufe nach einem der Ansprüche 1 bis 8, für ein Profil mit außenseitiger Nut, dadurch gekennzeichnet, daß das Einhängeteil (13') sich im Grund der innenseitigen Nut (3) abstützt und mit dem Auffangblech (5) oberseitig ein Bügel (19) verbunden ist, der sich im Grund der außenseitigen Nut (4) abstützt und die Abbiegung (12') gegen die Außenwand (1) presst.

10. Regentraufe nach einem der Ansprüche 1 bis 9, dadurch gekennzeichnet, daß die seitlichen Enden (20) der Abbiegung (12') schräg zur Außenwand (1) verlaufen.

**Claims**

1. A rain gutter for caravans, mobile homes, etc. with a horizontally extending profile attached to an external wall and having at least one inwardly facing groove for suspending a window and optionally an outwardly facing groove for suspending an awning, characterised in that the rain-water chute consists of a catch plate (5) projecting from the external wall (1) in the form of an outwardly tapering channel and, projecting upwards from the catch plate (5), at least one suspension part (8, 13, 17) which can be inserted in one of the grooves (3, 4) and extends over only part of the width of the catch plate (5) on the wall side thereof, the wall-side edge (7, 12, 16) of the catch plate (5) thereby coming to rest against the external wall (1).

2. A rain gutter according to Claim 1, characterised in that the suspension part (8, 13) is integral with the catch plate (5), projects upwards approximately centrally from the wall-side edge (7, 12) of the catch plate (5), and engages in the inwardly facing groove (3).

3. A rain gutter according to Claim 2, characterised in that the suspension part (8, 13) has an upper suspension rim (9, 13) bent out away from the external wall, for engaging in the inwardly facing groove (3).

4. A rain gutter according to one of Claims 1 to 3, characterised in that on the wall side the catch plate (5) has a bent part (12, 16), extending upwards and forming a surface to rest against the external wall (1).

5. A rain gutter according to Claim 4, characterised in that the edge (7, 12, 16) of the catch plate (5) which is intended to rest against the external wall (1) is provided with an elastic abutment surface (10, 15) on the side nearest the wall.

6. A rain gutter according to Claim 4, characterised in that the suspension part (8) extends upwards from the wall-side edge (7) at an acute angle to the bent part (16).

7. A rain gutter according to Claim 1 for a profile with an outwardly facing groove, characterised in that the suspension part (17) is elastic in construction and is connected to the upper face of the catch plate (5), and has a thickened push-in end (18') extending transverse to the catch plate (5), for insertion in the outwardly facing groove (4).

8. A rain gutter according to one of Claims 1 to 7, characterised in that the side edges (6) of the catch plate (5) are bent upwards.

9. A rain gutter according to one of Claims 1 to 8 for a profile with an outwardly facing groove, characterised in that the suspension part (13') is braced on the base of the inwardly facing groove (3) and a strap (19) is connected to the upper face of the catch plate (5) and is braced on the base of the outwardly facing groove (4), pressing the bent part (12') against the external wall (1).

10. A rain gutter according to one of Claims 1 to 9, characterised in that the lateral ends (20) of the bent part (12') extend at an angle to the external wall (1).

## Revendications

1. Egout des eaux de pluie pour remorque habitable, telle qu'une remorque-camping qui comporte un élément profilé horizontal solidaire d'une paroi extérieure, cet élément profilé présentant au moins une gorge ouverte vers l'intérieur pour y suspendre une fenêtre, et éventuellement une gorge ouverte vers l'extérieur pour y suspendre un store ; caractérisé en ce qu'il comporte, en saillie sur la paroi extérieure (1), un collecteur en tôle (5) constitué par une gouttière dirigée vers l'extérieur, et au moins une pièce d'accrochage (8, 13, 17) orientée vers le haut et adaptée à s'engager dans l'une des gorges (3, 4 ); cette pièce d'accrochage n'occupant qu'une partie de la largeur du collecteur en tôle (5), à l'endroit de la paroi extérieure (1) ; et le bord (7, 12, 16) du collecteur en tôle (5) disposé en regard de la paroi extérieure (1) ; étant agencé pour venir en appui sur cette paroi.

2. Egout selon la revendication 1, caractérisé en ce que la pièce d'accrochage (8, 13) fait corps avec le collecteur en tôle (5) auquel cette pièce est fixée, sensiblement au milieu du bord (7, 12) du collecteur disposé en regard de la paroi extérieure (1) ; cette pièce d'accrochage s'étendant vers le haut au-dessus du collecteur, pour s'accrocher dans la gorge (3) ouverte vers l'intérieur.

3. Egout selon la revendication 2, caractérisé en ce que la pièce d'accrochage (8, 13) comporte une bordure supérieure (9, 13), recourbée à l'opposé de la paroi extérieure (1) et adaptée à s'engager dans la gorge (3) ouverte vers l'intérieur.

4. Egout conforme à l'une des revendications 1 à 3, caractérisé en ce que le collecteur en tôle (5) présente, en regard de la paroi extérieure (1), une partie (12, 16) repliée vers le haut, adaptée à venir en appui contre la paroi extérieure (1).

5. Egout selon la revendication 4, caractérisé en ce que le bord (7, 12, 16) du collecteur en tôle (5) adapté à venir en appui contre la paroi extérieure (1) est pourvu, en regard de cette paroi, d'une pièce d'appui élastique (10, 15).

6. Egout selon la revendication 4, caractérisé en ce que la pièce d'accrochage (8) part du bord (7) du collecteur en tôle, en regard de la paroi extérieure (1), et va vers le haut en formant une pointe, en direction de la partie repliée (16).

7. Egout selon la revendication 1, prévu pour se monter sur un profilé comportant une gorge ouverte vers l'extérieur, caractérisé en ce que la pièce d'accrochage (17) est élastique, et fixée à la face supérieure du collecteur en tôle (5) ; et en ce que la pièce d'accrochage présente une bordure d'extrémité (18') de profil épanoui, orientée transversalement par rapport à l'axe du collecteur en tôle (5), et adaptée à s'engager par coulissement dans la gorge extérieure (4).

8. Egout selon l'une des revendications 1 à 7, caractérisé en ce que les bords latéraux (6) du collecteur en tôle (5) sont repliés vers le haut.

9. Egout selon l'une des revendications 1 à 8, prévu pour se monter sur un profilé comportant une gorge ouverte vers l'extérieur, caractérisé en ce que la pièce d'accrochage (13') est en appui sur le fond de la gorge (3) ouverte vers l'intérieur, et en ce qu'un barreau de liaison (19) fixé à la face supérieure du collecteur en tôle (5) est en appui sur le fond de la gorge (4) ouverte vers l'extérieur, de manière à appliquer la bordure repliée (12') contre la paroi extérieure (1).

10. Egout selon l'une des revendications 1 à 9, caractérisé en ce que les extrémités latérales (20) de la bordure repliée (12') s'écartent obliquement de la paroi extérieure (1).

Fig.1

Fig.2

Fig. 3

Fig.4

Fig. 5

Fig 6

2

4

3

19

13'

12'

15

1

5

21

22

20

22

5

13'

15

19

21

12'

Fig 7